# EUROPEAN PATENT SPECIFICATION

(11) **EP 0 881 113 B1**
(45) Date of publication and mention of the grant of the patent: **31.07.2002**
(21) Application number: 98304232.6
(22) Date of filing: 28.05.1998
(51) Int. Cl.: B60J 10/02, B29C 47/02

(54) **Method of manufacturing panel with frame**
Verfahren zur Herstellung einer Platte mit Rahmen
Procédé pour la fabrication d'un panneau avec cadre

(30) Priority: 29.05.1997 JP 14029597; 07.05.1998 JP 12501898
(43) Date of publication of application: 02.12.1998
(73) Proprietor: TOKAI KOGYO KABUSHIKI KAISHA, Obu-shi, Aichi-ken (JP)
(72) Inventor: Hatakenaka, Hiroshi, Toyota-shi, Aichi-ken (JP); Sugimoto, Yoshinori, Toyota-shi, Aichi-ken (JP); Tanaka, Takanori, Toyota-shi, Aichi-ken (JP); Ito, Tosikazu, Obu-shi, Aichi-ken (JP); Hirai, Yoichi, Obu-shi, Aichi-ken (JP); Arai, Junji, Obu-shi, Aichi-ken (JP); Nagai, Katsuaki, Obu-shi, Aichi-ken (JP)
(74) Representative: Hallybone, Huw George

(56) References cited:
- EP-A- 0 586 073
- FR-A- 2 153 492
- US-A- 5 133 537
- US-A- 5 445 780
- PATENT ABSTRACTS OF JAPAN vol. 97, no. 1, 31 January 1997 & JP 08 230011 A (ASAHI GLASS CO LTD), 10 September 1996

## Description

### Background of the Invention

### 1. Field of the Invention

The present invention relates to a method of manufacturing a panel with a frame (hereinafter "a panel unit").

### 2. Description of the Related Art

A frame (for example, a molding for a vehicle) can be individually formed by extrusion molding. Such a frame can be mounted on the periphery of a panel (for example, a windshield for a vehicle), thereby producing a panel unit. However, it is rather troublesome and time-consuming work to mount the frame on the periphery of the panel. Therefore, our known solution has been to extrusion mold on and simultaneously bond the frame on the periphery of the panel, thereby forming such a panel unit. Such a method of manufacturing a panel unit is shown, for example, in Japanese Laid-Open Patent Publication No. 4-261822 (which application corresponds to U.S. Patent No. 5,411,696).

In the above-noted known method of manufacturing the panel unit, an apparatus which includes a robot for handling the panel is generally used. The robot is of a six-axes type having a panel retainer unit and may be controllably driven by a signal corresponding to a predetermined operational program to continuously move the panel retained by the panel retainer unit in such a manner that an extrusion molding die moves along the periphery of the panel. When the panel is moved relative to the extrusion molding die with the periphery of the panel engaged with an engagement groove of the extrusion molding die, the frame is molded on the periphery of the panel and bonded thereto.

However, robots of this type have an inherent oscillating movement that is generally maximized when the robot is controlled to abruptly turn the panel such that the extrusion molding die passes a corner section of the panel. The increased oscillating movement of the robot causes circumferentially extending stripe-like irregularities or wrinkles to be produced on the outer surface of the frame corresponding to the corner section of the panel. As a result, the frame may have an undesirable rough or uneven appearance resulting from such irregularities.

Further examples of other related art are found in Japanese Laid-Open Patent Publications Nos. 63-15716, 64-70220 (which application corresponds to U.S. Patent No. 4,910,071), 4-226321, 6-87164, 7-32875 (which application corresponds to U.S. Patent No. 5,445,780), 7-164572, 8-183080, and Japanese Laid-Open Utility Model Publication No. 3-60455.

A method for manufactoring a panel unit according to the preamble of claim 1 is known from JP-A-08-230011.

### Summary of the Invention

It is an object of the present invention to provide a method of manufacturing a panel unit which may reduce or eliminate the problem associated with known methods and which may form a panel unit having a frame without irregularities.

Other objects of the invention will be apparent upon review of the specification and drawings.

In order to attain the present objects, the present invention provides a method for manufacturing a panel unit according to the characterized part of claim 1.

The methods according to the teaching herein permit formation of the panel unit in which the frame formed on the periphery of the panel does not have stripe-like irregularities on the outer surface thereof corresponding to a corner section of the panel. This improved appearance results from the fact that when the frame is formed on the corner section of the panel, the ornamental body applied on the frame body may smoothly flex to suitably cover the outer surface of the frame body without producing any irregularities or wrinkles thereon. Thus, the frame will have a good appearance.

A variety of solid molding materials or ornamental bodies may be utilized with the present invention. For example, the ornamental body may comprise a substrate and an ornamental layer. The substrate may be melted by the heat of the molten molding material and bonded to the frame body by fusion bonding, thereby firmly attaching the ornamental body to the frame body.

The ornamental layer may comprise a laminated glossy film. The substrate may be made of the same material as the molten molding material or of a material compatible with the molten molding material.

The ornamental layer may be made of a heat resistive material having a melting point higher than that of the molten molding material. The substrate also may be made of a material having a melting point substantially equal to or lower than that of the molten molding material.

In addition, the ornamental layer may be made of substantially the same material as the material from which the substrate is made.

The ornamental body may further comprise a core member which is embedded therein.

The step of extruding a molten molding material may be performed by utilizing an extrusion molding die having a molding material feeder passage through which the liquid or molten molding material is extruded to form the frame body.

The extrusion molding die may have an ornamental body introduction passage through which the ornamental body is drawn to be applied on the extruded frame body when the molten molding material is extruded.

The extrusion molding die also may have a heat insulating portion formed along the ornamental body introduction passage, so that the heat of the extrusion molding die is prevented from being conducted to the ornamental body.

Other objects, features and advantages of the invention will be more fully understood from the following detailed description and appended claims when considered with the accompanying drawings.

### Brief Description of the Drawings

FIG. 1 is a perspective view of a molding die, a windshield and a molding during formation of the molding on the periphery of the windshield, which corresponds to a first embodiment of the present invention;
FIG. 2 is a transverse sectional view of the molding formed on the periphery of the windshield;
FIG. 3 is a transverse sectional view of an ornamental body of the molding;
FIG. 4 is an enlarged partly transverse sectional view of the ornamental body, illustrating the construction of an ornamental sheet of the ornamental body;
FIG. 5 is an enlarged partly transverse sectional view similar to FIG. 4, illustrating a modified construction of the ornamental sheet;
FIG. 6 is a plan view of a panel unit;
FIG. 7 is an exploded perspective view of the molding die;
FIG. 8 is a perspective view of apparatus including the molding die used to manufacture the panel unit;
FIG. 9 is a transverse sectional view of an ornamental body of a molding, which corresponds to a second embodiment of the present invention;
FIG. 10 is an elevational view of a molding die during formation of the molding on the periphery of a windshield;
FIG. 11 is an elevational view of a molding die during formation of a molding on the periphery of a windshield, which corresponds to a third embodiment of the present invention;
FIG. 12 is a transverse sectional view of the molding formed on the periphery of the windshield;
FIG. 13 is a transverse sectional view similar to FIG. 12, illustrating a modified construction of an ornamental body of the molding;
FIG. 14 is a transverse sectional view similar to FIG. 12, illustrating another modified construction of the ornamental body of the molding;
FIG. 15 is a transverse sectional view similar to FIG. 12, illustrating a further modified construction of the ornamental body of the molding;
FIG. 16 is a transverse sectional view similar to FIG. 3, illustrating a modified construction of the ornamental body of the molding according to the first embodiment of the present invention; and
FIG. 17 is a transverse sectional view similar to FIG. 9, illustrating a modified construction of the ornamental body of the molding according to the second or third embodiment of the present invention.

### Detailed Description of the Invention

Preferred embodiments of the invention will now be described in detail with reference to the drawings.

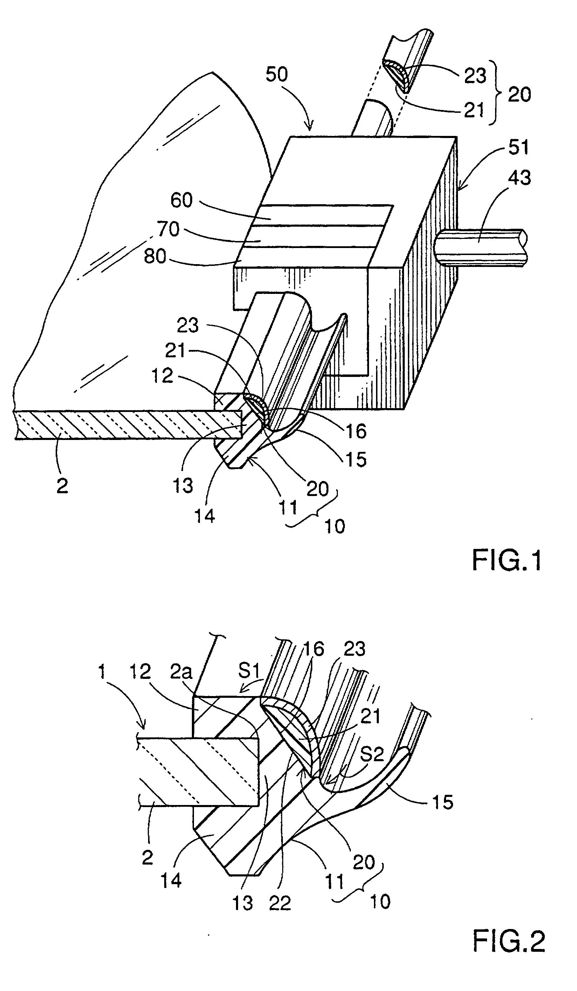

A method of manufacturing a panel unit according to a first embodiment will now be described with reference to FIGS. 1 to 8. In this embodiment, a windshield and a molding for a vehicle are exemplified as a panel and a frame, respectively.

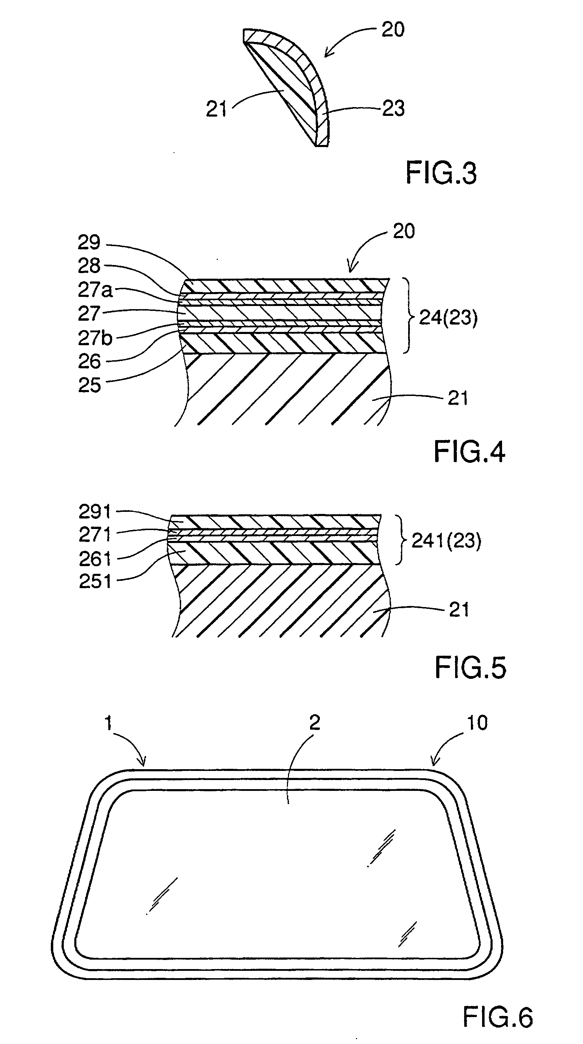

Referring to FIG. 6, shown therein and generally designated by the reference number 1 is a panel unit has been adapted to be fitted in an opening of a vehicle body (not shown). The panel unit comprises a windshield 2 as the panel and a molding 10 as the frame. As shown in FIG. 2, the molding 10 is attached to the periphery of the windshield 2 and is constructed from a molding body 11 and an ornamental body 20 covering at least a portion of the outer surface of the molding body 11. While the frame is shown to extend completely around the periphery of the panel in Figure 6, the frame need not completely encircle the panel to practice the present invention.

The molding body 11 is preferably formed by extrusion molding of thermoplastic synthetic resins, synthetic rubbers, elastomers or other resinous materials, for example, PVC (polyvinyl chloride), polyurethane and plastigel, and is preferably simultaneously bonded to the periphery of the windshield 2. Moreover, the molding body 11 preferably is formed as an elongated single piece and comprises a cover portion 12 which contacts the outer surface (upper surface as viewed in the drawing) of the windshield 2, a leg portion 13 extending along the end surface of the windshield 2, a support portion 14 engaging the inner surface (lower surface as viewed in the drawing) of the windshield 2, and a lip 15 outwardly extending from the leg portion 13 to contact the outer surface of the vehicle body. The molding body 11 preferably has an outer slanted bonding surface 16 to which the ornamental body 20 is attached. As will be recognized, the bonding surface 16 is preferably arranged to extend along the cover portion 12 and the leg portion 13 so that the ornamental body 20 attached thereto extends along the lip 15.

As shown in FIG. 3, the solid molding material or ornamental body 20 preferably comprises a substrate 21 and a laminated ornamental layer or laminated ornamental sheet 23 adhered to the substrate 21. The ornamental body 20 is previously formed to a desired cross-sectional configuration. As shown in FIGS. 2 and 3, the substrate 21 of the ornamental body 20 is preferably made of a material that is compatible with the molding body 11, so that the substrate 21 may be reliably bonded to the bonding surface 16 when the ornamental body 20 is attached to the bonding surface 16. Most preferably, the substrate 21 comprises the same material as the molding body 11, or another thermoplastic synthetic resin that is compatible with the molding body 11. As will be appreciated, the substrate 21 preferably is previously formed to a desired cross-sectional configuration such that the ornamental body 20 has the desired cross-sectional configuration when the ornamental sheet 23 is adhered to the substrate 21. As best shown in FIG. 3, in this embodiment, the substrate 21 preferably is formed to have a substantially half moon or semicircular configuration in cross section.

As shown in the embodiment of FIG. 3, the ornamental sheet 23 is designed and arranged to entirely cover the outer surface of the substrate 21. Preferably, the ornamental sheet 23 is simultaneously adhered to the outer surface of the substrate 21 by fusion bonding when the substrate 21 is extrusion molded. However, the ornamental sheet 23 can be adhered to the outer surface of the substrate 21 by adhesive after the substrate 21 is extrusion molded.

As shown in FIG. 4, in this embodiment, the ornamental sheet 23 can be a laminated glossy film 24 which may include, for example, an innermost backing layer 25, an inner adhesive layer 26, an inner metal particle layer 27b, a base film layer 27, an outer metal particle layer 27a, an outer adhesive layer 28 and an outermost clear layer 29.

The backing layer 25 is preferably made of the same PVC material as the substrate 21 and has a thickness of about 100 to 300 micrometers. The backing layer 25 is preferably bonded to the outer surface of the substrate 21 by fusion bonding, thereby adhering the laminated film 24 to the outer surface of the substrate 21.

The base film layer 27 may comprise a resin film made of polyester, PET (polyethylene terephthalate) or other resinous materials and preferably has a thickness of about 25 to 100 micrometers. The inner and outer metal particle layers 27b and 27a may comprise, for example, aluminum thin films deposited on the upper and lower surfaces of the base film layer 27 by evaporation or other such processes, respectively. It is important to note that the base film layer 27 preferably is made of a greater heat resistive resinous material having a melting point greater than those of the molding body 11 and the substrate 21.

The outer clear layer 29 may comprise a resin film made of transparent or semi-transparent ETFE (ethylene-tetrafluoroethylene copolymer) or other fluorinated resinous materials and has a thickness of about 25 to 100 micrometers. It is important to note that the outer clear layer 29 preferably is also made of a greater heat resistive resinous material having a melting point greater than those of the molding body 11 and the substrate 21.

As shown in FIG. 5, the ornamental sheet 23 also can be a laminated glossy film 241 which comprises an innermost backing layer 251, an inner adhesive layer 261, a metal particle layer 271 and an outermost clear layer 291.

The backing layer 251 is preferably made of the same PVC material as the substrate 21 and has a thickness of approximately 100 to 300 micrometers. The backing layer 251 can be adhered, for example, by fusion bonding to the outer surface of the substrate 21, thereby adhering the laminated film 241 to the outer surface of the substrate 21.

The outer clear layer 291 preferably comprises a resin film made of transparent or semi-transparent ETFE or other fluorinated resinous materials and has a thickness of about 25 to 100 micrometers. The metal particle layer 271 preferably comprises a chromium thin film deposited on the lower surface of the outer clear layer 291 by sputtering or other such processes. The outer clear layer 291 preferably is also made of a greater heat resistive resinous material having a melting point greater than those of the molding body 11 and the substrate 21.

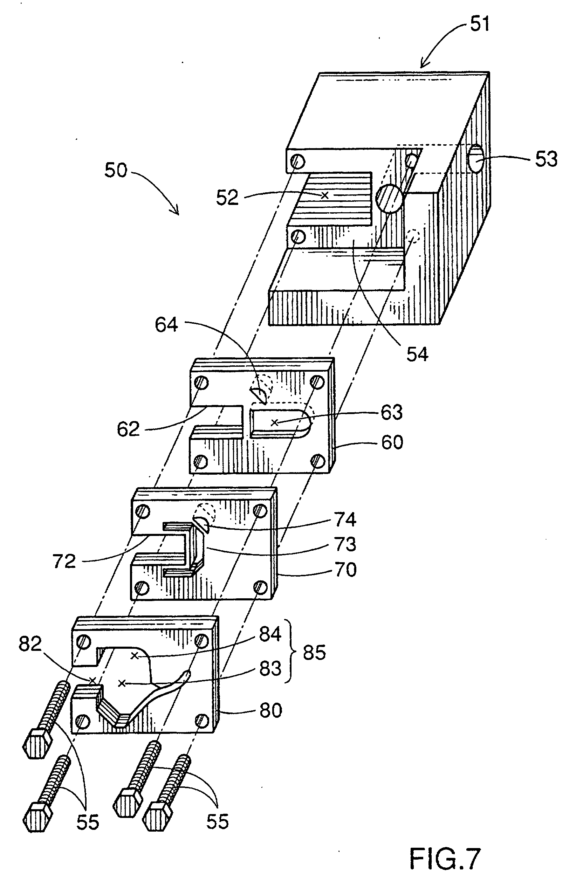

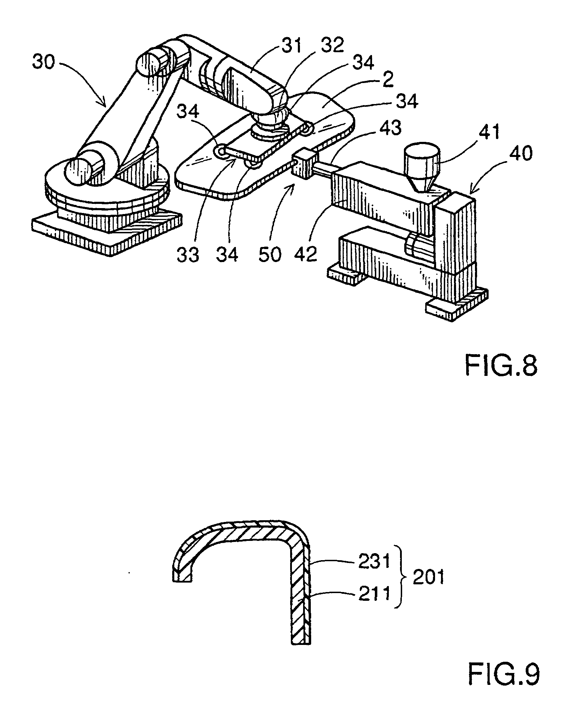

Apparatus used in the methods described according to this embodiment will now be described with reference to FIGS. 7 and 8.

As shown in FIG. 8, the apparatus preferably includes an extrusion molding die 50 which is adapted to move along the periphery of the windshield 2, and an extruder 40 to which the molding die 50 is connected through a feeder pipe 43. The extruder 40 has a hopper 41 through which a molding material is introduced into the extruder 40, and an extruder body 42 receiving an extruding screw (not shown) therein and coupled to the feeder pipe 43.

As shown in FIG. 7, the molding die 50 preferably comprises a die body 51 and first, second and third molding plates 60, 70 and 80, respectively. The die body 51 is provided with a molding plate receiving space 54 into which the first, second and third molding plates 60, 70 and 80 are received in this order. The first, second and third molding plates 60, 70 and 80 preferably are integrally secured to the die body by bolts 55. The die body 51 has a windshield engagement groove 52 communicating with the space 54. The die body 51 also has a molding material feeder port 53 communicating with the space 54 and coupled to the feeder pipe 43.

The first molding plate 60 positioned innermost to the die body 51 preferably is formed with a windshield engagement groove 62 aligned to the groove 52 of the die body 51, a molding material feeder passage 63 communicating with the feeder port 53, and an ornamental body introduction passage 64 into which the ornamental body 20 is inserted. As will be recognized, passage 64 has substantially the same cross-sectional configuration as the ornamental body 20.

The second molding plate 70 intermediately positioned preferably is formed with a windshield engagement groove 72 aligned to the groove 62 of the first molding plate 60, a molding material feeder passage 73 communicating with the feeder passage 63, and an ornamental body introduction passage 74 aligned to passage 64 and having substantially the same configuration as passage 64.

The third molding plate 80 positioned outermost to the die body 51 preferably is formed with a windshield engagement groove 82 aligned to the groove 72 of the second molding plate 70, a molding material feeder passage 83 communicating with feeder passage 73, and an ornamental body introduction passage 84 aligned to passage 74 and having partly substantially the same profile as passage 74.

As will be apparent from Figure 7, the groove 82, feeder passage 83 and introduction passage 84 are not separated from each other, so that feeder passage 83 cooperates with introduction passage 84 to form a molding space 85 around the periphery of the windshield 2 when the windshield 2 is inserted into the groove 82. In addition, feeder passage 83 and introduction passage 84 preferably are profiled or shaped such that the configuration of the molding space 85 conforms to the transverse cross-sectional configuration of the molding 10.

As shown in FIG. 8, the apparatus preferably further includes a robot 30 for handling the windshield 2. The robot 30 preferably is of a six-axes type, and includes a support arm 31 and a panel retainer unit 33 mounted on a retainer portion 32 provided on the distal end of the support arm 31. The panel retainer unit 33 has a desired number (shown as four in number for illustration purposes) of suction disks 34 for releasably retaining the windshield 2. The suction disks 34 may be coupled to a vacuum source (not shown). Upon energization of the vacuum source, the suction disks 34 stick to the windshield 2 so that the windshield 2 is retained on the panel retainer unit 33.

Preferably, processes for manufacturing the panel unit 1 will now be described in connection with the operation of the apparatus in Figures 7 and 8.

The vacuum source coupled to the robot 30 is first energized, and the robot 30 is driven so that the windshield 2 is retained on the panel retainer unit 33. The robot 30 is further driven to move the panel retainer unit 33 retaining the windshield 2 so that the periphery of the windshield 2 engages the grooves 52, 62, 72 and 82 of the molding die 50, as shown in FIGS. 1 and 8. When the molding die 50 is thus positioned on the periphery of the windshield 2, feeder passage 83 and introduction passage 84 of the third molding plate 80 cooperate with the periphery of the windshield 2 to form the molding space 85 therearound.

Further, a heat-sensitive adhesive can be previously applied around the periphery of the windshield 2, if desired.

After the molding die 50 is positioned on the periphery of the windshield 2, the robot 30 is further driven by a signal corresponding to a predetermined operational program to continuously move the windshield 2 in such a manner that the molding die 50 moves along the periphery of windshield 2. Simultaneously, the extruder 40 is actuated to rotate the extruding screw in the extruder body 42, thereby feeding the liquid or molten molding material (e.g., molten PVC) into the port 53 of the molding die 50 through the feeder pipe 43. The molding material fed into the port 53 from the extruder 40 is introduced into passages 63 and 73, and is then extruded from passage 83. Thus, the molding body 11 is continuously formed on and bonded to the periphery of the windshield 2. As will be recognized, the extruder 40 preferably is controlled in response to the operational program of the robot 30 so that the required amount of molding material is extruded from passage 83.

At the same time, the ornamental body 20 preferably is inserted into passage 84 through passages 64 and 74 from a leading end thereof. Therefore, when the molten molding material is extruded from passage 83 to form the molding body 11, the ornamental body 20 contacts the molding material at the substrate 21 thereof and is drawn from passage 84 together with the molding material so as to continuously cover the outer slanted bonding surface 16 of the molding body 11 as extruded. The ornamental body 20 covering the molding body 11 is reliably adhered to the molding body 11 by fusion bonding. As will be easily understood, this fusion bonding results because the substrate 21 of the ornamental body 20 is melted by the heat of the molding material and is immediately bonded to the bonding surface 16 of the molding body 11. As a result, the molding 10 constructed from the molding body 11 and the ornamental body 20 is integrally formed on the periphery of the windshield 2, thereby producing the panel unit 1.

Typically, the ornamental body 20 is coiled around a roller (not shown). When the molding material is extruded from passage 83, the coiled ornamental body 20 is automatically uncoiled from the roller and is drawn from passage 84 together with the molding material. This uncoiling and drawing of the ornamental body 20 results from an adhesive force or bonding force between the substrate 21 of the ornamental body 20 and the molding body 11 as extruded. Therefore, the ornamental body 20 is not required to be forcedly uncoiled from the roller under control so as to be drawn from passage 84 in synchronization with an extrusion speed of the molding material.

The substrate 21 of the ornamental body 20 may act as a heat insulating layer that may prevent the heat of the molding material from conducting to the ornamental sheet 23 of the ornamental body 20. Therefore, the ornamental sheet 23 can be effectively prevented from melting when the ornamental body 20 contacts the molding material.

The substrate 21 of the ornamental body 20 may also act as a pressure damping layer that may prevent the pressure of the molding material from directly transferring to the ornamental sheet 23 when the ornamental body 20 contacts the molding material. Therefore, the ornamental sheet 23 is effectively prevented from unexpectedly deforming or stretching. As a result, if the ornamental sheet 23 comprises the laminated glossy film 24, the aluminum particle density of the metal particle layers 27b and 27a each constructed from the aluminum thin films is effectively prevented from drastically changing, thereby preventing the glossy film 24 from dulling and dimming. Similarly, if the ornamental sheet 23 comprises the laminated glossy film 241, the chromium particle density of the metal particle layer 271 constructed from the chromium thin film is effectively prevented from drastically changing, thereby preventing the glossy film 241 from dulling and dimming.

Moreover, although the inherent oscillating movement of the six-axes type robot 60 may be substantially increased when the robot 60 is controlled to abruptly turn the windshield 2 such that the molding die 51 moves along a corner section of the windshield 2, the molding 10 is not formed with circumferentially extending stripe-like irregularities on the outer surface thereof corresponding to the corner section of the windshield 2. This improved appearance results, because when the molding 10 is formed on the corner section of the windshield 2, the ornamental sheet 23 of the ornamental body 20 may smoothly flex and stretch to suitably cover the outer slanted bonding surface 16 of the molding body 11.

As shown in FIG. 2, the molding 10 preferably has a bonding layer 22 which is formed between the molding body 11 and the substrate 21 of the ornamental body 20. As will be apparent from FIG. 2, the bonding layer 22 is opposite to an upper peripheral edge 2a of the windshield 2, so that the molding body 20 is easily and unrestrictedly flexed around the upper peripheral edge 2a in the directions shown by arrows S1 and S2. As a result, when the molding 10 is formed on the corner section of the windshield 2, the ornamental body 20 is smoothly flexed to cover the bonding surface 16 of the molding body 11 without producing any wrinkles on the ornamental sheet 23 and is reliably combined therewith by fusion bonding.

As previously described, the laminated film 24 shown in FIG. 4 includes the clear layers 29 made of transparent or semi-transparent ETFE or other fluorinated resinous materials and the base film layer 27 made of polyester, PET or other resinous materials. On the other hand, the laminated film 241 shown in FIG. 5 includes only the clear layers 291 made of transparent or semi-transparent ETFE or other fluorinated resinous materials and does not include any film layer corresponding to the base film layer 27 of the laminated film 24. The laminated film 241 thus constructed has greater stretchability and flexibility than the laminate film 24, because polyester and PET have less stretchability and flexibility than ETFE.

Therefore, if the molding 10 is contemplated to be mounted on the windshield 2 of which the corner section has a large radius of curvature, the glossy film 24 preferably may be used as the ornamental sheet 23. To the contrary, if the molding 10 is contemplated to be mounted on the windshield 2 of which the corner section has a small radius of curvature, the glossy film 241 preferably may be used as the ornamental sheet 23 rather than the glossy film 24.

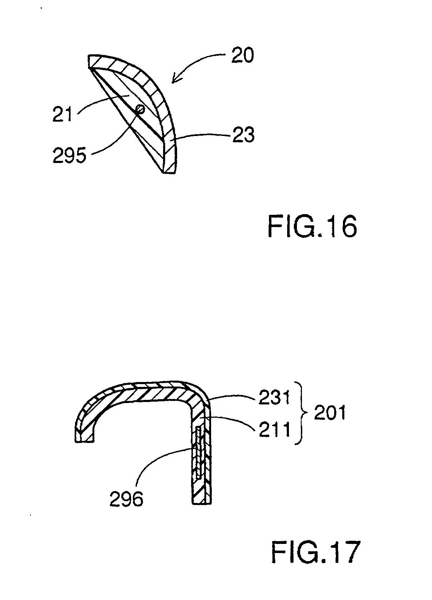

Further, as shown in FIG. 16, the ornamental body 20 may be modified so that the substrate 21 includes a core member 295 which has excellent flexibility and rigidity and less stretchability. The core member 295 preferably is embedded so as to longitudinally extend along the substrate 21 when the substrate 21 is formed by extrusion molding. The core member 295 comprises a wire having a circular configuration in cross section and is arranged in a desired portion of the substrate 21. The core member 295 preferably may be made of metal, glass fiber, carbon fiber or other materials.

The core member 295 may act as a reinforcement member to prevent unexpected stretching of the ornamental body 20 and to strengthen the ornamental body 20.

Thus, the core member 295 may effectively increase rigidity of the ornamental body 20. However, the ornamental body 20 preferably should not be prevented from smoothly flexing or bending along the molding body 11. Preferably, the core member 295 is chosen to have sufficient flexibility to permit bending of the ornamental body 20. Therefore, the ornamental body 20 can be smoothly flexed to cover the bonding surface 16 of the molding body 11 without producing any wrinkles on the ornamental sheet 23 and can be reliably bonded thereto.

It is important to note, however, that where the ornamental sheet 23 of the ornamental body 20 is constructed from the glossy film 24 shown in FIG. 4, such a core member 295 is not required. In such a case, the base film layer 27 of the glossy film 24 may act as the reinforcement member because it can be made of polyester, PET or other resinous materials having less stretchability and flexibility.

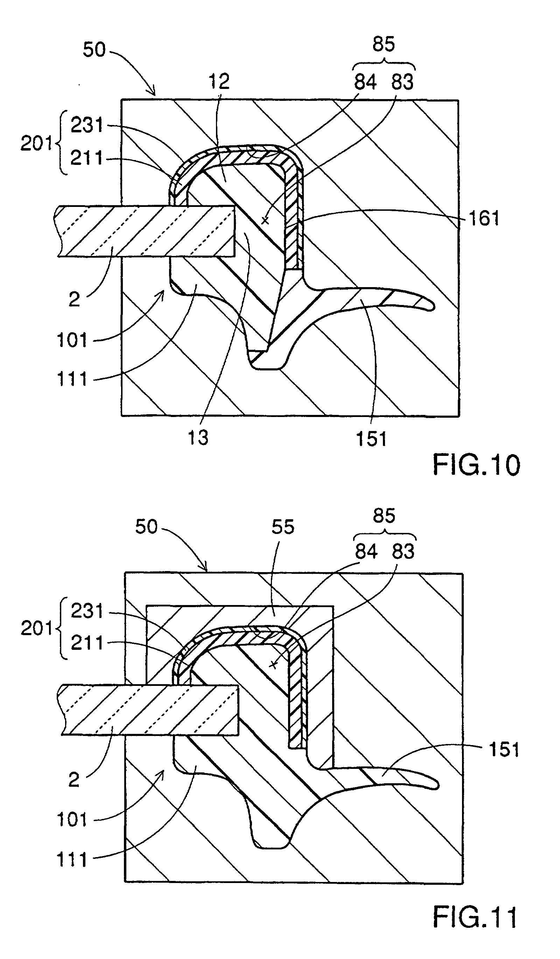

A method of manufacturing a panel unit according to a second embodiment will now be described with reference to FIGS. 9 and 10. This embodiment is related to the first embodiment. Therefore, only constructions that are different from those constructions described in the first embodiment will be explained.

Like the first embodiment, the panel unit comprises the windshield 2 and a molding 101. The molding 101 is constructed from a molding body 111 and an ornamental body 201. As shown in FIG. 9, the ornamental body 201 preferably comprises a substrate 211 and an ornamental layer or nonlaminated ornamental sheet 231 adhered to the substrate 211. The ornamental body 201 is previously formed to a desired cross-sectional configuration, for example, a reversed L-shaped cross-sectional configuration, so as to completely cover a head portion 12 and a leg portion 13 when it is bonded to the molding body 111. The substrate 211 of the ornamental body 201 preferably is made of a thermoplastic synthetic resinous material having a melting point substantially equal to or lower than that of a molding material from which the molding body 111 is made. On the other hand, the ornamental sheet 231 preferably is made of a heat resistive thermoplastic synthetic resinous material having a melting point higher than that of the molding material from which the molding body 111 is made. Furthermore, the molding body 111 preferably includes a lip 151 which corresponds to the lip 15 of the molding body 11 according to the first embodiment. However, the lip 151 preferably is made of a synthetic resinous material having an greater elasticity than the PVC material from which the molding body 111 is made.

The ornamental sheet 231 may be, for example, the laminated glossy films 24 and 241 used in the first embodiment. Further, the lip 151 can be made of the same material as the molding body 111.

If the molding body 111 is made of a PVC material having a polymerization degree of approximately 1500, the substrate 211 and the ornamental sheet 231 preferably should be made of a PVC material having a polymerization degree that is not more than 1500 and a PVC material having a polymerization degree that is not less than 2500, respectively.

Apparatus used in the manufacturing methods according to this embodiment are substantially identical with the apparatus used in the manufacturing methods according to the first embodiment except that each of passages 63, 73 and 83 (only passage 83 is shown) of the extrusion molding die 50 has a configuration different from that of each of passages 63, 73 and 83 of the molding die 50 used in the methods according to the first embodiment. Also, the molding die 50 has an additional feeder port (not shown) and additional feeder passages (not shown) for feeding the synthetic resinous material (hereinafter "the second molding material") from which the lip 151 is made. Therefore, no further description of this apparatus is necessary. Needless to say, passages 63, 73 and 83 of the present molding die 50 preferably are modified to conform to the transverse cross-sectional configuration of the ornamental body 201.

The present panel unit is manufactured using a process similar to that of manufacturing the panel unit 1 according to the first embodiment.

Like the first embodiment, after the molding die 50 is positioned on the periphery of the windshield 2 so as to form the molding space 85 around the periphery of the windshield 2, the molten molding material is fed into the molding die 50 and is extruded from passage 83. Simultaneously, the second molten molding material is fed into the molding die 50 from an additional extruder (not shown) and is extruded from passage 83. The molding material and the second molding material as extruded are suitably combined with each other during extrusion thereof. Thus, the molding body 111 having the lip 151, which is made of the second molding material different from the molding body 111, is continuously formed on the periphery of the windshield 2.

When the molten molding material is extruded from passage 83 to form the molding body 111, the ornamental body 201 contacts the molding materials at the substrate 211 and is drawn from passage 84 with the molding material so as to continuously cover an outer bonding surface 161 of the molding body 111 as extruded. The ornamental body 201 covering the molding body 111 is reliably adhered to the molding body 111 by fusion bonding. As will be recognized, the ornamental body 201 is extremely reliably adhered to the molding body 111 because such an ornamental body 201 is adapted to substantially completely cover the head portion 12 and the leg portion 13. As a result, the molding constructed from the molding body 111 and the ornamental body 201 is integrally formed on the periphery of the windshield 2, thereby producing the panel unit.

It is important to note, however, that the lip 151 may be made of the same molding material as the molding material from which the molding body 111 is made, if desired.

Moreover, as shown in FIG. 17, the ornamental body 201 shown in FIGS. 9 and 10 may be further modified to include a core member 296 which has excellent rigidity and less stretchability. The core member 296 preferably is embedded so as to longitudinally extend along the substrate 211 of the ornamental body 201 when the substrate 211 is formed by extrusion molding. The core member 296 preferably is a flattened wire having a thin rectangular configuration in cross section and is arranged in a desired portion (for example, a vertical wall portion) of the substrate 211. The core member 296 preferably may be made of metal, polyester, PET or other materials.

The core member 296 may act as a reinforcement member to prevent unexpected stretching of the ornamental body 201 and to strengthen the ornamental body 201.

As noted with respect to the first embodiment, the core member 296 may effectively increase rigidity of the ornamental body 201. However, the ornamental body 201 can not be prevented from smoothly flexing or bending along the molding body 111. Therefore, the ornamental body 201 should be able to be smoothly flexed to cover the molding body 111 without producing any wrinkles on the ornamental sheet 231 of the ornamental body 201 and can be reliably bonded thereto.

It is important to note, however, that where the ornamental sheet 231 of the ornamental body 201 is constructed from the glossy film 24 shown in FIG. 4, such a core member 296 is not required. In such a case, the base film layer 27 of the glossy film 24 may act as the reinforcement member, because it can be made of polyester, PET or other resinous materials having less stretchability and flexibility.

A method of manufacturing a panel unit according to a third embodiment will now be described with reference to FIGS. 11 to 15. This embodiment is a modification of the second embodiment. Therefore, only constructions that are different from the second embodiment will be explained.

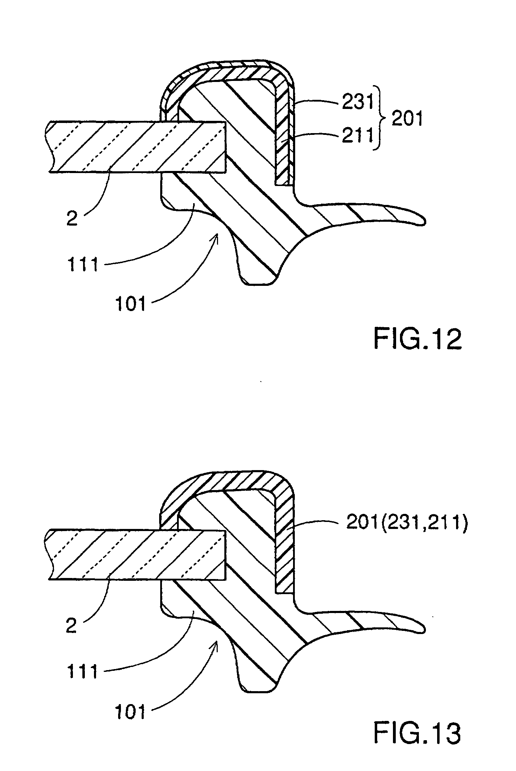

As shown in FIGS. 11 and 12, the molding 101 has the same construction as that of the molding 101 according to the second embodiment, except that the lip 151 is made of the same molding material as the molding material from which the molding body 111 is made.

Apparatus used in the manufacturing methods according to this embodiment are substantially identical with the apparatus used in the methods according to the second embodiment, except that the molding die 50 includes heat insulating portions or heat insulating blocks 55 each preferably made of Bakelite (phenol-formaldehyde resin) or other heat insulating materials. Also, the molding die does not have the additional feeder port and the additional feeder passages. Further, as clearly shown in Figure 11, passages 64, 74 and 84 (only passage 84 is shown) preferably are formed along the heat insulating blocks 55 (one of which is shown).

The present panel unit is manufactured through the same process as that of manufacturing the panel unit according to the second embodiment. Therefore, no further description of the process is necessary.

With respect to the present embodiment, like the second embodiment, the ornamental body 201 can be reliably attached to the molding body 111.

Additionally, when the process of manufacturing the molding is performed, the insulating block 55 may effectively prevent the heat of the molding die 50 from conducting to the ornamental sheet 231 of the ornamental body 201 so that the ornamental sheet 231 is effectively prevented from excessively heating. Therefore, the ornamental sheet 231 is prevented from melting or unexpectedly stretching by the heat of the molding die 50. Consequently, unlike the second embodiment, the ornamental sheet 231 of the ornamental body 201 can be made of a thermoplastic synthetic resinous material having a melting point substantially equal to that of a thermoplastic synthetic resinous material from which the substrate 211 is made. Further, as shown in FIG. 13, the ornamental body 201 may be modified so that the ornamental sheet 231 is made of the same thermoplastic synthetic resinous material as the substrate 211. In other words, the ornamental body 201 may be a nonlayered body.

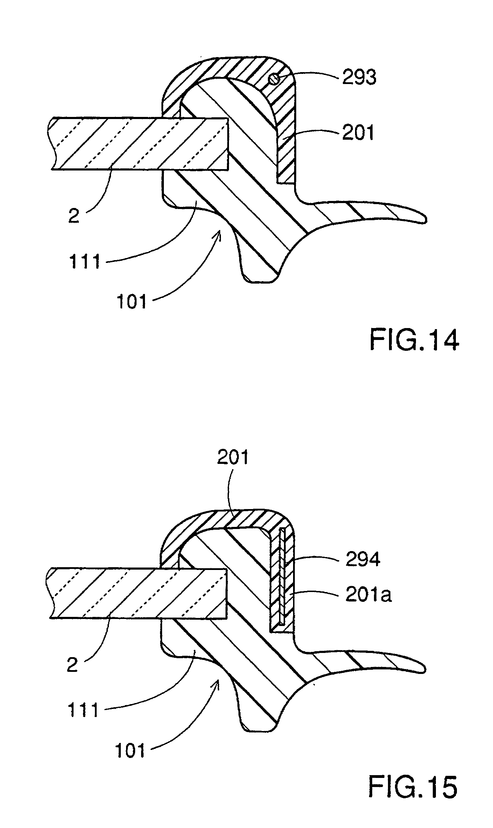

As shown in FIG. 14, the nonlayered ornamental body 201 shown in FIG. 13 may be further modified to include a core member 293 which has excellent flexibility and rigidity and less stretchability. The core member 293 preferably is embedded so as to longitudinally extend along the ornamental body 201 when the ornamental body 201 is formed by extrusion molding. The core member 293 preferably is a wire having a circular configuration in cross section and is arranged in a desired portion (for example, a thickened bent portion) of the ornamental body 201. The core member 293 preferably may be made of metal, glass fiber, carbon fiber or other materials.

The core member 293 may act as a reinforcement member to prevent unexpected stretching of the ornamental body 201 and to strengthen the ornamental body 201.

Again, as noted with respect to the first and second embodiments, the core member 293 may effectively increase the rigidity of the ornamental body 201. However, the ornamental body 201 should not be prevented from smoothly flexing or bending along the molding body 111. Therefore, the ornamental body 201 should be able to be smoothly flexed to cover the molding body 111 without producing any wrinkles thereon and can be reliably bonded thereto.

Moreover, as shown in FIG. 15, the nonlayered ornamental body 201 shown in FIG. 13 may be further modified to include a core member 294 which has excellent rigidity and less stretchability. The core member 294 preferably is embedded so as to longitudinally extend along the ornamental body 201 when the ornamental body 201 is formed by extrusion molding. The core member 294 is a flattened wire having a thin rectangular configuration in cross section and is arranged in a desired portion (for example, a vertical wall portion 201a) of the ornamental body 201. The core member 294 preferably may be made of metal such as aluminum and steel, polyester, PET or other materials.

The core member 294 may also act as a reinforcement member to prevent unexpected stretching of the ornamental body 201 and to strengthen the ornamental body 201.

In addition, like the ornamental body 201 of the molding 101 according to the second embodiment, the ornamental body 201 of the molding 101 shown in FIGS. 11 and 12 preferably may be modified to include a core member (not shown) similar to the core member 296.

Although in the above preferred embodiments, the windshield and the molding for a vehicle are exemplified as the panel and the frame, respectively, the panel and the frame in the present invention are not limited to the above. For instance, the panel may be a resin or metal panel. On the other hand, the frame may be a gasket or a packing.

Furthermore, although in the above preferred embodiments, the molding body is adapted to cover all of the upper, lower and end surfaces of the periphery of the windshield, the construction of the molding body is not limited to the above. For example, the molding body preferably may be modified to cover only the upper or lower surface of the periphery of the windshield. Further, the molding body preferably may be modified to cover the upper and end surfaces of the periphery of the windshield. Similarly, the molding body preferably may be modified to cover the lower and end surfaces of the periphery of the windshield.

While the invention has been described with reference to specific embodiments, the description is illustrative and is not to be construed as limiting the scope of the invention. Various modifications and changes may occur to those skilled in the art without departing from the scope of the invention as defined by the appended claims.

## Claims

1. A method for manufacturing a panel unit (1) having a frame (10; 101) disposed on a periphery of a panel (2), comprising the step of extruding a liquid or molten molding material to form a frame body (11; 111) on the periphery of the panel (2) while applying a solid molding material or ornamental body (20; 201) having a desired configuration in cross-section to the extruded frame body (11; 111); **characterized in that**:
the configuration of the solid molding material or ornamental body (20, 201) before application to the frame body (11; 111) is substantially half moon, semicircular or reversed L-shaped.

2. A method as defined in claim 1, wherein the solid molding material or ornamental body (20;201) comprises a substrate (21;211) and an ornamental layer (23; 231), wherein the substrate (21; 211) is melted by the heat of the liquid or molten molding material and bonds to the frame body (11;111) by fusion bonding, thereby joining the solid molding material or ornamental body (20; 201) with the frame body (11; 111).

3. A method as defined in claim 2, wherein the ornamental layer (23; 231) comprises a laminated glossy film (24: 241).

4. A method as defined in claim 3, wherein the laminated glossy film (24) comprises an innermost backing layer (25; 251), an inner adhesive layer (26; 261), a metal particle layer (27b; 271) and an outermost clear layer (29; 291).

5. A method as defined in any one of claims 2-4, wherein the substrate (21; 211) is made of the same material as the liquid or molten molding material or a material compatible with the liquid or molten molding material.

6. A method as defined in any one of claims 2-5, wherein the ornamental layer (23; 231) is made of a heat resistive material (29; 291) having a melting point higher than the melting temperature of the liquid or molten molding material.

7. A method as defined in any one of the preceding claims, wherein a core member (293; 294; 295; 296) is embedded within the solid molding material or the ornamental body (20; 201).

8. A method as defined in any one of the preceding claims, wherein the extruded frame body (11, 111) comprises a leg portion (13) extending along the end surface of the panel (2) and a lip (15; 151) outwardly extending from the leg portion (13) to contact an outer surface of a vehicle body.

9. A method as defined in any one of the preceding claims, wherein the liquid or molten molding material is extruded onto the panel (2) through an extrusion molding die (50) having a molding material feeder passage (63, 73, 83) and a solid molding material or ornamental body introduction passage (64, 74, 84), wherein the ornamental body introduction passage (64, 74, 84) has substantially the same cross-sectional configuration as the solid molding material or ornamental body (20; 201).

10. A method as defined in claim 9, wherein the extrusion molding die (50) comprises a heat insulating portion (55) disposed along the solid molding material or ornamental body introduction passage (64, 74, 84) in order to prevent heat from the extrusion molding die (50) from conducting to the ornamental layer (23; 231).

## Patentansprüche

1. Verfahren zur Herstellung einer Platteneinheit (1) mit einem am Umfang einer Platte (2) angeordneten Rahmen (10; 101), wobei man ein flüssiges oder geschmolzenes Formmaterial zur Bildung eines Rahmenkörpers (11; 111) am Umfang der Platte (2) aufextrudiert, während man ein festes Formmaterial oder einen Zierkörper (20; 201) mit einer gewünschten Konfiguration im Querschnitt an dem extrudierten Rahmenkörper (11; 111) anbringt; **dadurch gekennzeichnet, daß**
die Konfiguration des festen Formmaterials oder des Zierkörpers (20, 201) vor Anbringung an dem Rahmenkörper (11; 111) im wesentlichen halbmondförmig, halbkreisförmig oder umgekehrt L-förmig ist.

2. Verfahren nach Anspruch 1, bei dem das feste Formmaterial oder der Zierkörper (20; 201) einen Träger (21; 211) und eine Zierschicht (23; 231) umfaßt, wobei der Träger (21; 211) durch die Hitze des flüssigen oder geschmolzenen Formmaterials geschmolzen wird und durch Schmelzkleben mit dem Rahmenkörper (11; 111) verbunden wird, wodurch das feste Formmaterial oder der Zierkörper (20; 201) mit dem Rahmenkörper (11; 111) zusammengefügt wird.

3. Verfahren nach Anspruch 2, bei dem die Zierschicht (23; 231) eine laminierte Glanzfolie (24; 241) umfaßt.

4. Verfahren nach Anspruch 3, bei dem die laminierte Glanzfolie (24) eine innerste Trägerschicht (25; 251), eine innere Klebeschicht (26; 261), eine Metallteilchenschicht (27b; 271) und eine äußerste klare Schicht (29; 291) umfaßt.

5. Verfahren nach einem der Ansprüche 2 - 4, bei dem der Träger (21; 211) aus dem gleichen Material wie das flüssige oder geschmolzene Formmaterial oder aus einem mit dem flüssigen oder geschmolzenen Formmaterial kompatiblen Material besteht.

6. Verfahren nach einem der Ansprüche 2 - 5, bei dem die Zierschicht (23; 231) aus einem wärmebeständigen Material (29; 291) besteht, dessen Schmelzpunkt höher ist als die Schmelztemperatur des flüssigen oder geschmolzenen Formmaterials.

7. Verfahren nach einem der vorhergehenden Ansprüche, bei dem ein Kernglied (293; 294; 295; 296) in dem festen Formmaterial oder dem Zierkörper (20; 201) eingebettet ist.

8. Verfahren nach einem der vorhergehenden Ansprüche, bei dem der extrudierte Rahmenkörper (11; 111) einen sich entlang der Endfläche der Platte (2) erstreckenden Schenkelteil (13) und eine sich vom Schenkelteil (13) nach außen zur Berührung einer Außenfläche einer Fahrzeugkarosserie erstreckende Lippe (15; 151) umfaßt.

9. Verfahren nach einem der vorhergehenden Ansprüche, bei dem das flüssige oder das geschmolzene Formmaterial durch eine Extrusionsdüse (50) mit einem Speisekanal (63, 73, 83) für das Formmaterial und einem Einleitkanal (64, 74, 84) für das feste Formmaterial oder den Zierkörper auf die Platte (2) extrudiert wird, wobei der Einleitkanal (64, 74, 84) für den Zierkörper im wesentlichen die gleiche Querschnittskonfiguration besitzt wie das feste Formmaterial oder der Zierkörper (20; 201).

10. Verfahren nach Anspruch 9, bei dem die Extrusionsdüse (50) einen Wärmeisolierteil (55) umfaßt, der entlang dem Einleitkanal (64, 74, 84) für das feste Formmaterial oder den Zierkörper angeordnet ist, um zu verhindern, daß Wärme von der Extrusionsdüse (50) zur Zierschicht (23; 231) geleitet wird.

## Revendications

1. Procédé de fabrication d'un ensemble de panneau (1) ayant un cadre (10 ; 101) disposé sur une périphérie d'un panneau (2), comportant l'étape d'extrusion d'un matériau de moulage liquide ou fondu pour former un corps de cadre (11 ; 111) à la périphérie du panneau (2) tout en appliquant un matériau de moulage plein ou corps ornemental (20 ; 201) ayant une configuration voulue en coupe sur le corps de cadre extrudé (11 ; 111), **caractérisé en ce que**
la configuration du matériau de moulage plein ou corps ornemental (20 ; 201) avant application sur le corps de cadre (11 ; 111) a sensiblement une forme en demi-lune, semi-circulaire ou de L inversé.

2. Procédé selon la revendication 1, dans lequel le matériau de moulage plein ou corps ornemental (20 ; 201) comporte un substrat (21 ; 211) et une couche ornementale (23 ; 231), le substrat (21 ; 211) étant fondu par la chaleur du matériau de moulage liquide ou fondu et se fixant sur le corps de cadre (11 ; 111) par fixation par fusion, en reliant ainsi le matériau de moulage plein ou corps ornemental (20 ; 201) au corps de cadre (11 ; 111).

3. Procédé selon la revendication 2, dans lequel la couche ornementale (23 ; 231) comprend un film stratifié brillant (24 ; 241).

4. Procédé selon la revendication 3, dans lequel le film stratifié brillant (24) comporte une couche de support la plus à l'intérieur (25 ; 251), une couche intérieure d'adhésif (26 ; 261), une couche de particules métalliques (27b ; 271) et une couche transparente la plus à l'extérieur (29 ; 291).

5. Procédé selon l'une quelconque des revendications 2 à 4, dans lequel le substrat (21 ; 211) est réalisé dans le même matériau que le matériau de moulage liquide ou fondu ou dans un matériau compatible avec le matériau de moulage liquide ou fondu.

6. Procédé selon l'une quelconque des revendications 2 à 5, dans lequel la couche ornementale (23 ; 231) est réalisée dans un matériau résistant à la chaleur (29 ; 291) ayant un point de fusion plus élevé que la température de fusion du matériau de moulage liquide ou fondu.

7. Procédé selon l'une quelconque des revendications précédentes, dans lequel un élément formant noyau (293 ; 294 ; 295 ; 296) est enrobé dans le matériau de moulage plein ou corps ornemental (20 ; 201).

8. Procédé selon l'une quelconque des revendications précédentes, dans lequel le corps de cadre extrudé (11 ; 111) comporte une partie de patte (13) s'étendant le long de la surface d'extrémité du panneau (2) et une lèvre (15 ; 151) s'étendant vers l'extérieur à partir de la partie de patte (13) pour venir en contact avec une surface extérieure d'une carrosserie de véhicule.

9. Procédé selon l'une quelconque des revendications précédentes, dans lequel le matériau de moulage liquide ou fondu est extrudé sur le panneau (2) par l'intermédiaire d'une filière de moulage par extrusion (50) ayant un passage d'alimentation en matériau de moulage (63, 73, 83) et un passage d'introduction de matériau de moulage plein ou corps ornemental (64, 74, 84), dans lequel le passage d'introduction de corps ornemental (64, 74, 84) a sensiblement la même configuration en coupe que le matériau de moulage plein ou corps ornemental (20 ; 201).

10. Procédé selon la revendication 9, dans lequel la filière de moulage par extrusion (50) comporte une partie thermiquement isolante (55) disposée le long du passage d'introduction de matériau de moulage plein ou de corps ornemental (64, 74, 84) afin d'empêcher la chaleur provenant de la filière de moulage par extrusion (50) d'être amenée jusqu'à la couche ornementale (23 ; 231).
